Europäisches Patentamt

European Patent Office

Office européen des brevets

(19)

(11) Veröffentlichungsnummer: **0 226 212**
**B1**

(12)

# EUROPÄISCHE PATENTSCHRIFT

(45) Veröffentlichungstag der Patentschrift:
31.01.90

(51) Int. Cl.⁴: **B62D 65/00**

(21) Anmeldenummer: **86117574.3**

(22) Anmeldetag: **17.12.86**

(54) **Vorrichtung und Verfahren zum Zusammenfügen von Aggregaten von der Unterseite her an einer Kraftfahrzeugkarosse.**

(30) Priorität: **20.12.85 DE 3545449**

(43) Veröffentlichungstag der Anmeldung:
**24.06.87 Patentblatt 87/26**

(45) Bekanntmachung des Hinweises auf die Patenterteilung:
**31.01.90 Patentblatt 90/5**

(84) Benannte Vertragsstaaten:
**DE ES FR GB IT SE**

(56) Entgegenhaltungen:
**DE-A- 3 150 476**
**FR-A- 2 264 761**

(73) Patentinhaber: **Bayerische Motoren Werke Aktiengesellschaft, Patentabteilung AJ-3 Postfach 40 02 40 Petuelring 130, D-8000 München 40(DE)**

(72) Erfinder: **Bock, Günter, Phantasiestrasse 35, D-8000 München 82(DE)**
Erfinder: **Schwannberger, Erich, Blütenstrasse 9, D-8047 Karlsfeld(DE)**
Erfinder: **Gericke, Ekkehard, Dr., Aicherweg 9a, D-8300 Landshut-Altdorf(DE)**
Erfinder: **Elsner, Jörg, Haidenseestrasse 39, D-8000 München 80(DE)**
Erfinder: **Schrafl, Johann, Sternbergerstrasse 2, D-8431 Waltersberg(DE)**

(74) Vertreter: **Bücken, Helmut, Bayerische Motoren Werke Aktiengesellschaft Postfach 40 02 40 Petuelring 130 - AJ-30, D-8000 München 40(DE)**

## Beschreibung

Vorrichtung und Verfahren zum Zusammenfügen von Aggregaten von der Unterseite her an einer Kraftfahrzeugkarosse

Die Erfindung bezieht sich auf ein Verfahren der im Oberbegriff des ersten Anspruchs genannten Gattung sowie auf eine Vorrichtung zur Durchführung dieses Verfahrens nach dem Oberbegriff des Anspruchs 6.

Eine derartige Anlage ist aus der DE-OS 33 37 160 bekannt. Bei der dort beschriebenen Anordnung werden die zu montierenden Aggregate auf einem Montage-Aggregateträger positioniert. Dieser wird durch einen Bodenförderer von Station zu Station bewegt. Die in einem Gehänge angeordneten Karossen werden an einer Fügestation auf den Montage-Aggregateträger aufgesetzt. Um Lagefehler zwischen den einzelnen Aggregaten und der Karosse zu erkennen, sind Bezugseinrichtungen vorgesehen. Nach dem Aufsetzen der Karosse auf den Montageaggregateträger wird dieser zu einer Schraubstation weitergefahren, wo im Boden eingelassene, verfahrbar gelagerte Schraubroboter dann die Aggregate an die Karosse schrauben. Anschließend werden die so komplettierten Karossen wieder von dem Montage-Aggregateträger abgeladen und einem weiteren Fördersystem übergeben.

Nachteilig ist es bei dieser Ausführungsform, daß die Karosse erst auf den Montage-Aggregateträger abgesetzt wird um dann anschließend wieder von ihm entfernt zu werden. Die beim Aufsetzen der Karosse auf den Montage-Aggregateträger notwendige Positionierung ist zwar angesprochen, jedoch ist nur eine Lösung in der Form denkbar, daß die Positioniereinrichtung gleichzeitig als Trageinrichtung für die Karosse dienen, daß die Positioniereinrichtungen verfahrbar in der Montage-Aggregatetraverse gelagert sind.

Aufgabe der vorliegenden Erfindung ist es, ein Verfahren und eine Vorrichtung zur Durchführung des Verfahrens bereitzustellen, mit dem das Verbinden von Karosse und Aggregaten wesentlich einfacher, schneller und sicherer durchzuführen ist.

Diese Aufgabe wird erfindungsgemäß durch die kennzeichnenden Merkmale des ersten Anspruchs gelöst. Die Lösung basiert auf der Erkenntnis, daß die Karosse nicht aus dem Hängeförderer zum Komplettieren mit den Aggregaten gelöst werden muß, sondern daß die Aggregate von unten mit Hilfe einer Hubeinrichtung an die Karosse herangefahren werden und dann entweder sofort verschraubt werden oder erst mit Hilfe des Montage-Aggregateträges an dem Gehänge befestigt werden. Die aufgrund der Lagetoleranzen von Karosse und Aggregate notwendige Fügehilfe ist erfindungsgemäß ortsfest angeordnet und nicht wie beim Stand der Technik auf jedem Montage-Aggregateträger. Dadurch werden die Montage-Aggregateträger in ihrem Aufbau wesentlich vereinfacht. Auch wird dadurch der Vorteil erreicht, daß die Fügehilfe eine feste Bezugslage hat und daß nicht die relativ schwere Karosse ausgerichtet weden muß, sondern daß nach der Karosse die einzelnen Aggregate ausgerichtet werden.

Einen geeigneten Hängeförderer beschreibt beispielsweise die DE-A 3 543 193.

Je nach Lage der Befestigungspunkte der Aggregate und der Karosse und der Hubvorrichtung für den Montage-Aggregateträger ist es sinnvoll, die Verschraubung in einer weiteren Station vorzunehmen. Hierzu wird dann der Montage-Aggregateträger mit dem Hängeförderer gekoppelt. Die Verschraubung kann dann in einer separaten Schraubstation durchgeführt werden. Dadurch wird die Zugänglichkeit der einzelnen Befestigungsstellen erhöht (Anspruch 2).

Vorteilhaft ist es, die Karosse und den Montage-Aggregateträger, wie Anspruch 3 beschreibt, in die Fügestation einfahren zu lassen. Dadurch ist auf relativ einfache Art eine Vorpositionierung mit hoher Genauigkeit möglich.

Eine besondere bei der Anordnung nach Anspruch 3 geeignete Fügehilfe beschreiben in ihrer Wirkungsweise die kennzeichnenden Merkmale des Anspruchs 4. Diese Fügehilfe zeichnet sich insbesondere dadurch aus, daß keine optischen Überwachungselemente oder Taster notwendig sind.

Sollte je nach Art des Hängeförderers ein seitliches Pendeln der Karosse beim Anhalten in der Fügestation auftreten, so wird die Weiterbildung nach Anspruch 5 vorteilhaft angewandt. Dadurch wird auch verhindert, daß beim Ankoppeln des Montage-Aggregateträges an das Gehänge Relativbewegungen auftreten.

Eine zur Durchführung des erfindungsgemäßen Verfahrens geeignete Vorrichtung beschreiben die kennzeichnenden Merkmale des Anspruchs 6.

Aus der DE-A 3 150 476 ist eine Montageeinrichtung zum Zusammenbau von mindestens zwei Montageteilen, insbesondere einer Fahrzeugkarosse mit einem Fahrzeugmotor, bekannt. Hierzu wird die Fahrzeugkarosse über eine Transportvorrichtung an den Montageort gefahren und dann die zu montierenden Teile von unten über einen verfahrbaren Rahmen gegen die Fahrzeugkarosse angehoben.

Nachteilig bei dieser Anordnung ist es, daß keinerlei Mittel vorgesehen sind, um die Karosse zu den zu montierenden Teilen oder umgekehrt auszurichten. Dies muß dann von einem Werker übernommen werden. Wie dies geschehen soll, ist dieser Schrift nicht entnehmbar, da keinerlei Mittel vorgesehen sind, die Karosse oder die zu montierenden Teile innerhalb ihrer Haltevorrichtungen zu bewegen.

Die Weiterbildung nach Anspruch 7 beschreibt eine einfache Möglichkeit, eine Ausrichtung der Aggregate auf dem Montage-Aggregateträger zu erlauben. Daneben können durch die Trennung von Aufnahmeplatte und Aggregatetraverse die Aggregate auf die Aggregatetraverse vormontiert werden an hierfür optimierten Arbeitsplätzen. Weiterhin ist es dadurch mögich, die Aggregatetraverse automatisch aufsetzen zu lassen.

Die Merkmale des Anspruchs 8 bzw. 9 beschreiben je eine einfach aufgebaute Klemmeinrichtung zum Klemmen der Aufnahmeplatte in der entsprechend der Karossenlage positionieten Stellung. Als Steuereinrichtung kann eine Zylinder-Kolben-Einheit verwendet werden, die hydraulisch oder pneumatisch angesteuert wird. Es ist jedoch genausogut möglich, andere, gleichwirkende Mittel, wie Elektromotor oder elektromechanische Mittel, vorzusehen.

Die Merkmale des Anspruchs 10 beschreiben eine Fügehilfe. Der Vorteil dieser Ausführungsform liegt darin, daß sie wenig Raum beansprucht und direkt neben der Transporteinrichtung für den Montage-Aggregateträger und die Karosse angebracht werden kann. Ein weiterer Vorteil dieser Fügehilfe ist darin zu sehen, daß sowohl die Lageerkennung der Karosse als auch das Ausrichten der Aggregate von ihr durchgeführt werden kann.

Durch die Merkmale des Anspruchs 11 wird erreicht, daß sich die Fügehilfe beim Ausrichten der Aggregate nicht an der Karosse abstützen muß. Dies könnte zu Bewegungen der Karosse führen, so daß beim anschließenden Zusammenfügen Positionsungenauigkeiten vorhanden wären.

Eine bevorzugte Ausführungsform der Klemmeinrichtung für die Fügehilfe beschreibt Anspruch 12.

Die Merkmale des Anspruchs 13 beschreiben eine vorteilhaft ausgebildete Sucheinrichtung. Diese kommt ohne jegliche optische Überwachungseinrichtung oder elektrisch betätigte Taster aus.

Anspruch 14 beschreibt eine vorteilhaft aufgebaute Korrektureinrichtung zum Ausrichten der Aggregate nach der Lage der Karosse.

Da je nach Ausführung der Hubeinrichtung für den Montage-Aggretageträger dieser die Befestigungsstellen zwischen den Aggregaten und der Karosse im hochgefahrenen Zustand verdecken kann, wird die Weiterbildung nach Anspruch 15 vorgeschlagen. Dadurch ist es möglich, die Aggregate im positionierten Zustand an der Karosse zu halten und das Verschrauben dann in einer separaten Schraubstation vorzunehmen.

Um ein Ankoppeln des Montage-Aggregateträgers sicher durchführen zu können, kann es sinnvoll sein, des Gehänge festzulegen (Anspruch 16). Eine hierzu geeignete Ausführungsform beschreibt Anspruch 17.

Anspruch 18 beschreibt eine einfach aufgebaute und doch funktionssicher arbeitende Befestigungseinrichtung, um den Montage-Aggregateträger an dem Gehänge zu befestigen.

Die Weiterbildung nach Anspruch 19 hat den Vorteil, daß ein unbeabsichtigtes Öffnen der Befestigungseinrichtung verhindert wird.

Im folgenden wird die Erfindung anhand eines bevorzugten Ausführungsbeispiels näher beschrieben.

Es stellen dar:

Fig. 1 eine perspektifische, schematische Ansicht der einer Fügestation angelieferten Elemente;

Fig. 2 eine schematisierte Frontansicht eines in der Fügestation eingefahrenen Montage-Aggregateträgers mit Motor- und Vorderachsaggregaten;

Fig. 3 eine schematisierte Ansicht der Fügehilfe;

Fig. 4 eine Seitenansicht der Fügehilfe nach Fig. 3;

Fig. 5 eine Vorderansicht der Fügestation mit eingeschwenkter Fügehilfe;

Fig. 6a,b den schematischen Aufbau zweier Sucheinrichtungen für die Fügehilfe;

Fig. 7a,b eine Seitenansicht und Draufsicht auf die Korrektureinrichtung der Fügehilfe;

Fig. 8 eine Vorderansicht der Fügestation mit hochgefahrenem Montage-Aggregateträger;

Fig. 9a,b Seiten- und Vorderansicht der Befestigungseinrichtung zum Befestigen der Aggregatetraverse an dem Gehänge.

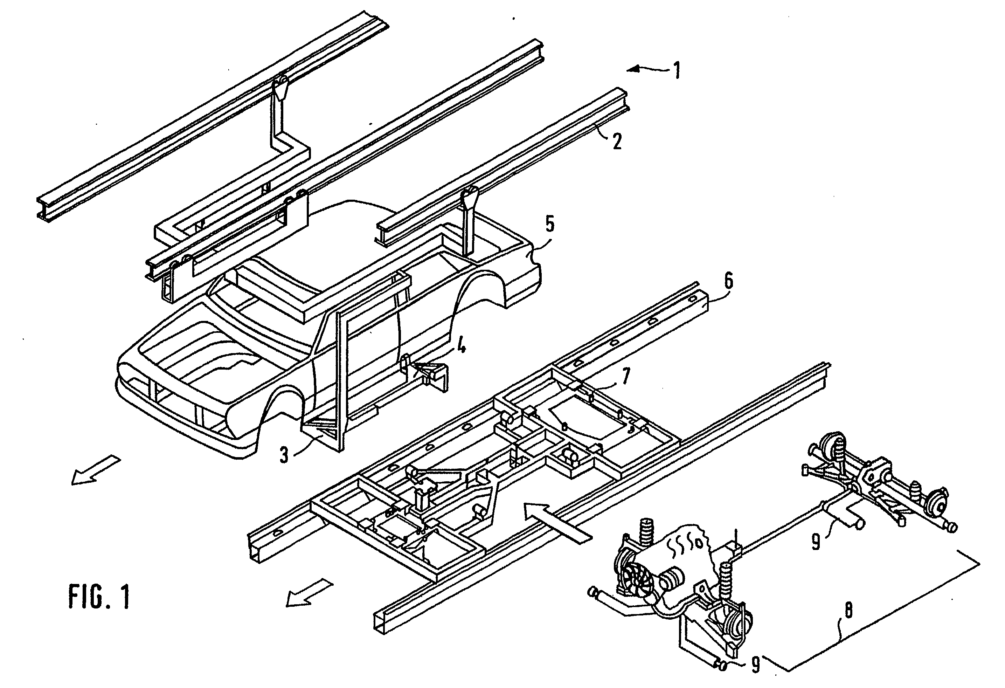

In Fig. 1 ist schematisiert ein Hängeförderer 1 dargestellt, der an der Decke oder geeigneten Trägern der nicht weiter dargestellten Werkhalle befestigt ist. Er besteht in an sich bekannter Weise aus den Führungsschienen 2 und dem darin geführten und bewegten Gehänge 3. Das Gehänge 3 trägt unter Zwischenschaltung einer Längstraverse 4 eine Karosserie 5. Die Verbindung Gehänge 3 zur Längstraverse 4 und Längstraverse 4 zur Karosserie ist spielfrei. Da die Befestigungen gleichzeitig definierte Aufnahmepunkte aufweisen, ist jede Karosse 5 in dem Hängeförderer 1 positioniert.

Auf oder in dem nicht näher dargestellten Boden der Werkhalle läuft ein in einer Transporteinrichtung 6 geführter Montage-Aggregateträger (MAT) 7. Dieser MAT hat die Form eines Knochens und dient zur Aufnahme der Vorderachse, des Motors, des Getriebes, des Antriebsstranges und der Hinterachse. Diese Aggregate 8 werden unter Zwischenschaltung von Aggregatetraversen 9 auf dem MAT 7 befestigt. Hierzu dient je eine Aufnahmeplatte 10, die über Rollen in der Ebene des MAT verfahrbar ist. Die beiden Aggregatetraversen selbst sind mit den beiden Aufnahmeplatten 10 unverrückbar verbunden. Die Aggregate 8 werden in den Aggregatetraversen 9 in vorbestimmten Positionen genau gehalten. Ebenso ist die Verbindung zwischen der Aggregatetraverse 9 und den Aufnahmeplatten eindeutig definiert.

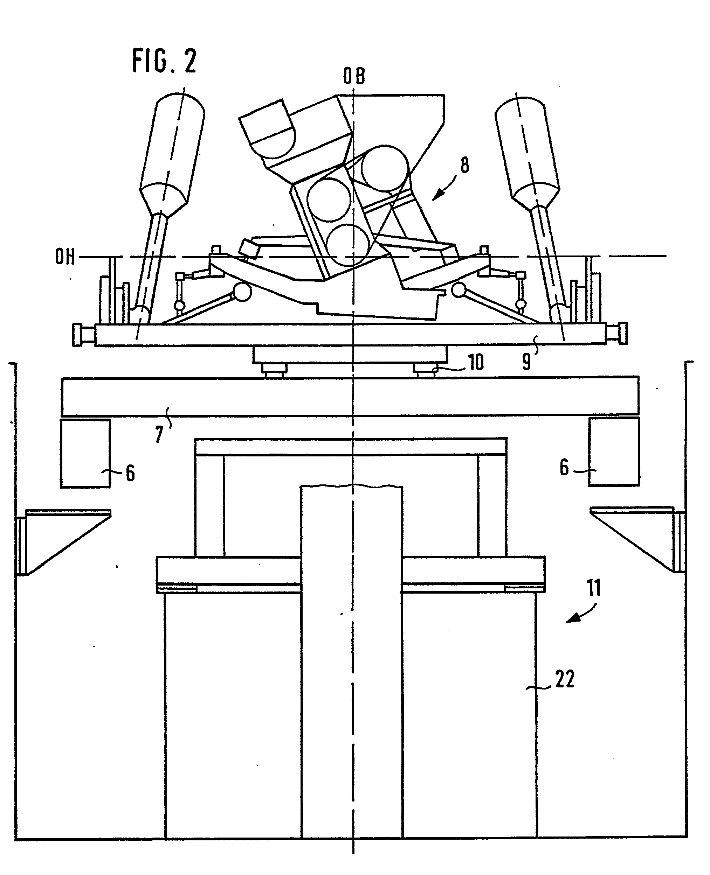

In Fig. 2 ist der untere Teil der Fügestation dargestellt. Auf der Transporteinrichtung 6 ist ein MAT 7 eingefahren. Er trägt die Aufnahmeplatte 10, auf der wiederum die Aggregatetraverse 9 mit den Aggregaten 8, hier eine Vorderachse mit Motor, befestigt ist.

Unterhalb des MAT 7 ist eine Hubstation 11 dargestellt. In ihr ist eine geeignete Hubeinrichtung 22 eingebaut, um den gesamten MAT 7 anzuheben.

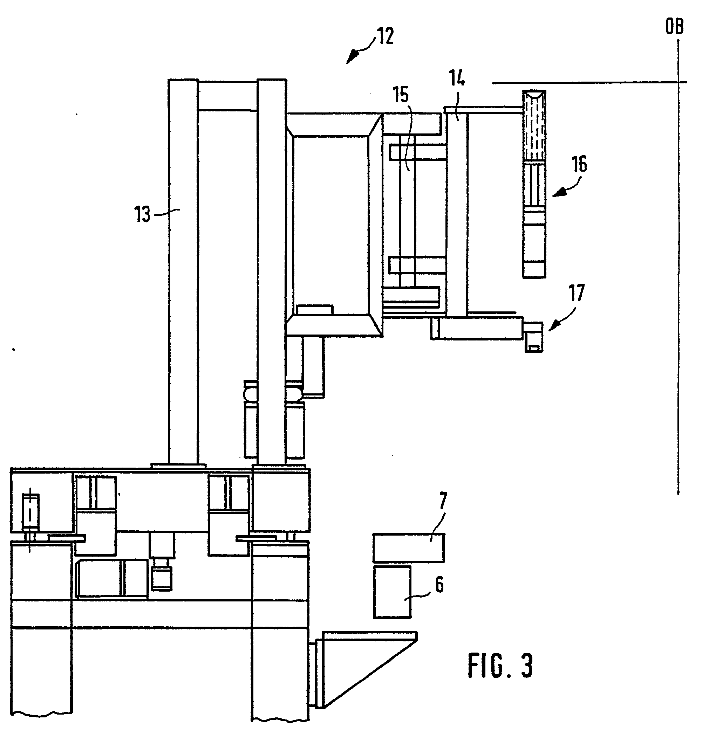

In Fig. 3 ist die Fügehilfe 12 dargestellt. Sie ist seitlich neben der Transporteinrichtung 6 derart angeordnet, daß sie von einer Ruhestellung außerhalb der Bewegungsbahn von MAT 7 und Karosse 5 in den Zwischenraum zwischen beiden eingefahren werden kann. In jeder Fügestation sind 4 Fügehilfen 12 vorgesehen, und zwar zwei für die Vorderachse und zwei für die Hinterachse.

Die Fügehilfe 12 nach Fig. 3 besteht aus einem Gestell 13 und einem Rahmen 14. Der Rahmen 14 ist bei 15 schwenkbar an dem Gestell 13 gelagert.

Der Rahmen 14 trägt an seinem vorderen oberen freien Ende die Sucheinrichtung 16. An seinem gegenüberliegenden unteren freien Ende ist die Korrektureinrichtung 17 befestigt. Aufbau und Funktion der Sucheinrichtung 16 und der Korrektureinrichtung 17 werden weiter unten beschrieben.

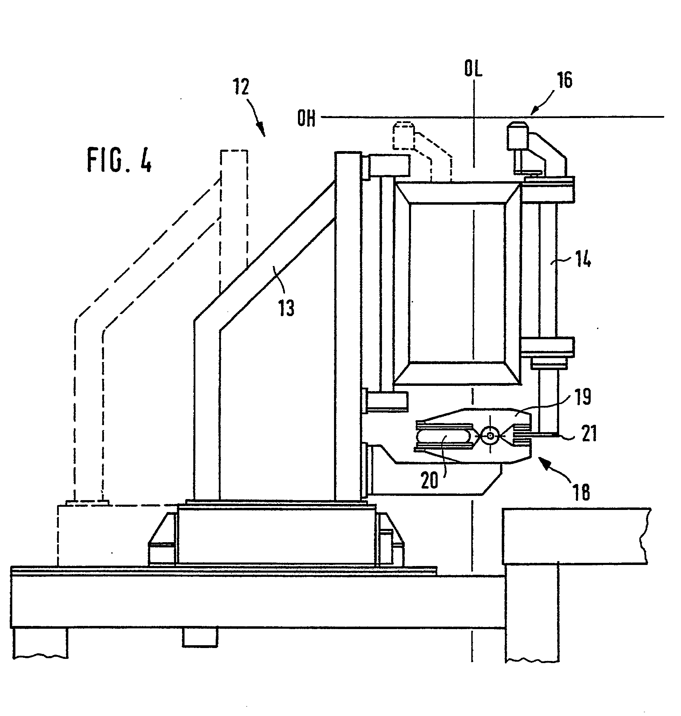

In Fig. 4 ist eine Seitenansicht der Fügehilfe 12 dargestellt. Im Gegensatz zu der Ausbildung nach Fig. 3 ist hier das Gestell 13 zusätzlich verfahrbar angeordnet, um mit den Rahmen 14 zusätzliche Positionen von Aggregaten zu Karosse 5 anzufahren. Weiterhin ist die Klemmeinrichtung 18 dargestellt, um den Rahmen 14 festzuklemmen. Die Klemmeinrichtung 18 ist als Zange 19 ausgebildet, die über eine Steuereinrichtung 20 betätigt wird. Im vorderen Bereich der Zange 19 ist eine Klemmplatte 21 vorgesehen, die mit dem Rahmen 14 verbunden ist und derart ausgestaltet ist, daß sie im Suchbereich der Sucheinrichtung 16 immer zwischen den beiden Zangenhälften sich bewegt.

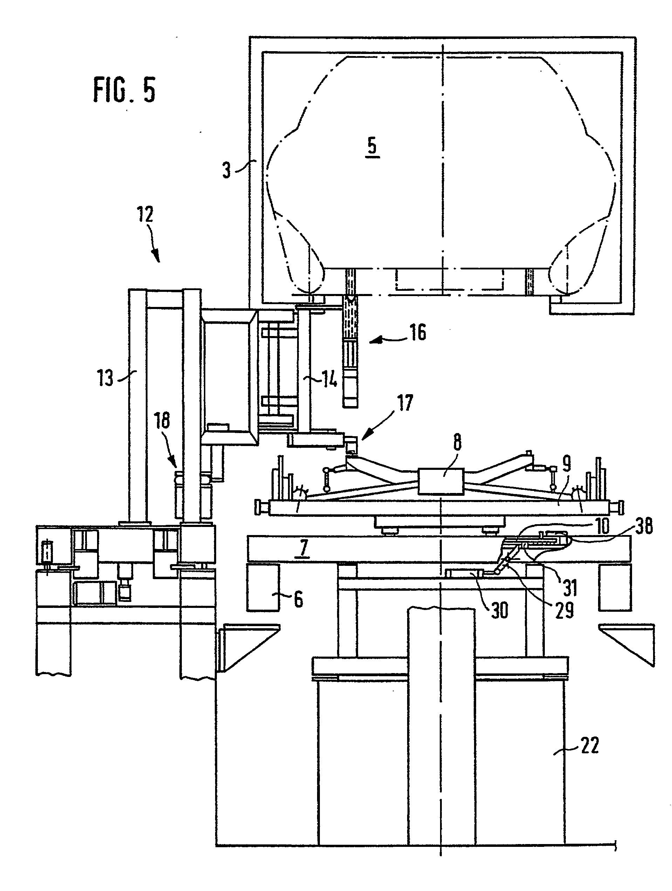

Im folgenden wird die Erfindung unter Bezugnahme der Fig. 5 - 9 näher erläutert. In Fig. 5 ist ein MAT 7 sowie eine Karosse 5 in die Fügestation eingefahren. Beide Einrichtungen werden von ihrer jeweiligen Fördereinrichtung derart gestoppt, daß der MAT 7 unter der Karosse 5 zum Stehen kommt. Anschließend wird der MAT 7 in der Hubstation verriegelt. Dies geschieht dadurch, daß die Hubeinrichtung 22 den MAT 7 geringfügig von der Transporteinrichtung 6 anhebt.

Gleichzeitig wird eine Positionierung des MAT 7 dadurch erreicht, daß bei seinem Anheben ein konischer Zentrierstift von der Hubeinrichtung 22 in eine dafür vorgesehene Öffnung an dem MAT 7 greift. Dies kann auch entfallen, wenn die Transporteinrichtung des MAT 7 ihn entsprechend genau positioniert in der Fügestation anhalten kann.

Anschließend wird die Karosse 5 über das Gehänge 3 positioniert. Dies geschieht dadurch, daß nicht näher dargestellte Verriegelungsarme seitlich an dem Gehänge 3 (oder der Längstraverse 4) angreifen und dieses festklemmen. Das Festklemmen geschieht in der Weise, daß das Gehänge 3 geringfügig angehoben wird um einen definierten Betrag, so daß die Toleranzen im Hängeförderer immer ausgeglichen sind.

Anschließend wird die Fügehilfe 12 eingeschwenkt in den Zwischenraum zwischen Karosse 5 und Aggregate 8.

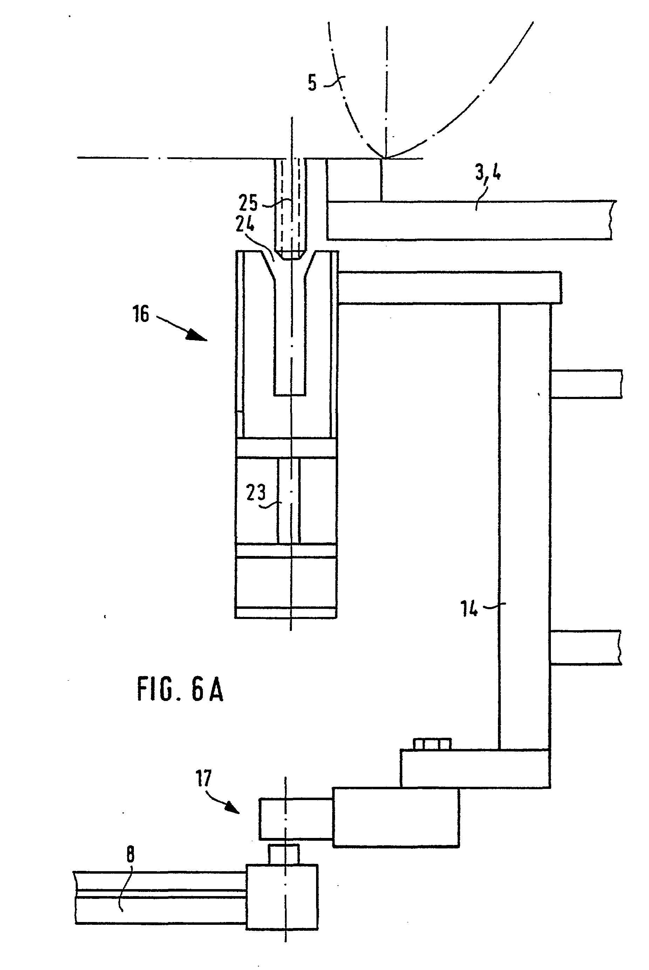

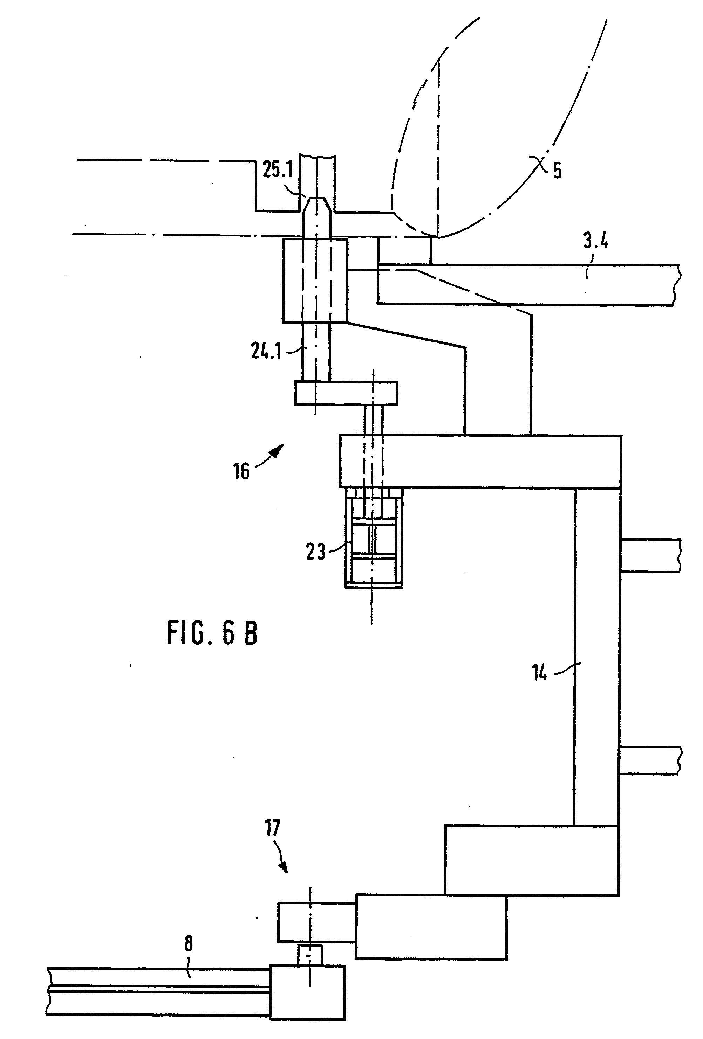

Die Sucheinrichtung 16 besteht - wie Fig. 6a,b zeigt - aus einer als Zylinder-Kolben-Einheit 23 ausgebildeten Steuereinrichtung. Hierbei ist der Zylinder an dem Rahmen 14 befestigt und der Kolben mit Kolbenstange im Zylinder beweglich geführt. Die Kolbenstange weist an ihrem oberen freien Ende entweder eine trichterförmige Öffnung 24 (Fig. 6a) oder einen kegelförmigen Kopf (24.1) auf.

Bei Fig. 6a ist an der Karosse 5 die Achsaufnahme befestigt. Sie dient als Suchstift 25. Dieser ist derart dimensioniert, daß er von der trichterförmigen Öffnung 24 aufgenommen werden kann. Aufgrund der trichterförmigen Öffnung 24 und der Tatsache, daß die Karosse einerseits im Gehänge und das Gehänge andererseits wieder festgeklemmt ist, treten nur geringe Abweichungen der Lage des Suchstiftes 25 auf. Wird nun der Rahmen 14 mit der Sucheinrichtung 16 unter die Karosse 5 geschwenkt und anschließend die Zylinder-Kolben-Einheit 23 hochverfahren, so werden die trichterförmige Öffnung 24 und der Suchstift 25 die Zylinder-Kolben-Einheit 23 und damit den Rahmen 14 ausrichten. Somit hat nun der Rahmen 14 die genaue Lage der Karosse 5 erfaßt. Anschließend wird die Steuereinrichtung 20 betätigt. Dadurch fahren die beiden Zangenhälften 19 zusammen und klemmen über die Klemmplatte 21 den Rahmen 14 in seiner augenblicklichen Lage fest.

Bei der Anordnung nach Fig.6b fährt die Zylinder-Kolben-Einheit 23 mit ihrem kegelförmigen Kopf 24.1 in die Paßbohrung 25.1. Auch hierdurch wird der Rahmen 14 ausgerichtet. Anschließend wird er - wie beschrieben - fixiert.

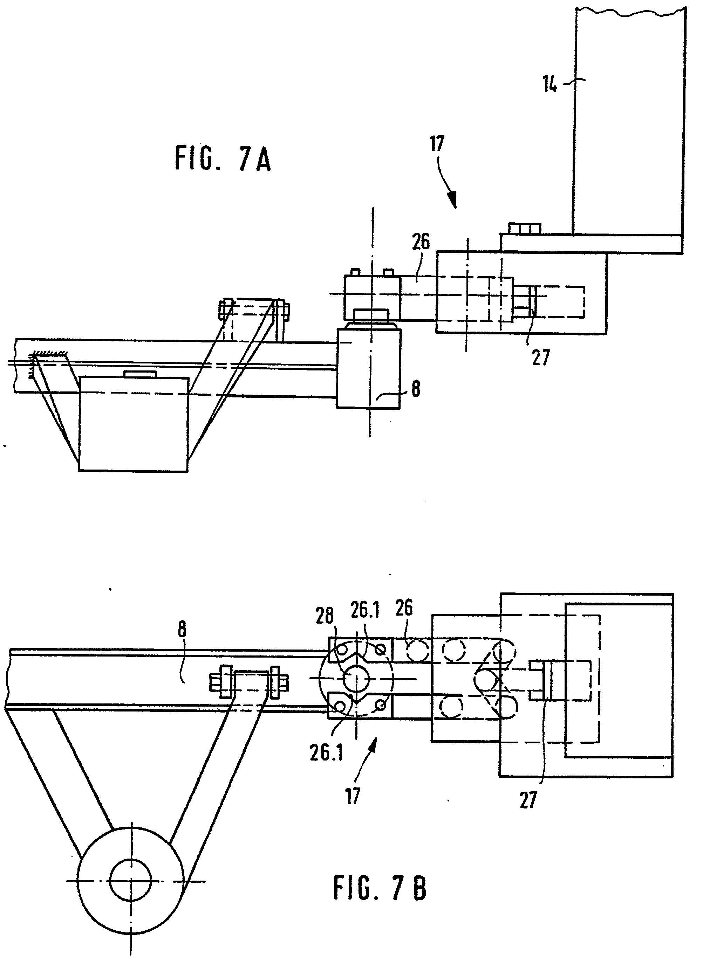

Anschließend werden die Aggregate ausgerichtet. Hierzu weist die Korrektureinrichtung 17 am unteren Ende des Rahmens 14 eine zangenartige Klemmeinrichtung 26 auf, die von einer Steuereinrichtung 27 über geeignete Gelenkglieder betätigt wird Fig. 7b. Die zangenartige Klemmeinrichtung 26 weist in ihrem Klemmbackenbereich Zentriereinschnitte 26.1 auf. Zum Ausrichten der Aggregate 8 wird die zangenartige Klemmeinrichtung 26 von der Steuereinrichtung 27 im Schließsinne betätigt. Hierbei wird dann eine an den Aggregaten vorhandene Bezugseinrichtung 28, hier ein Buchse, oder ein Aggregateverbund selbst oder eine Aufnahmeplatte 10 erfaßt und aufgrund der Ausbildung der Zentriereinschnitte 26.1 in einer genau definierten Lage festgeklemmt. Da die Aggregate 8 über die schwimmend gelagerte Aufnahmeplatte 10 in dem MAT 7 gelagert sind, können die Aggregate durch die Schließbewegung der zangenartigen Klemmeinrichtung 26 verschoben werden.

Nachdem nun die Fügehilfe 12 sowohl mit der Karosse 5 als auch mit den Aggregaten 8 verbunden ist, wird die Aufnahmeplatte 10 in ihrer augenblicklichen Lage festgeklemmt. Hierzu sind (Fig. 5) auf der Hubeinrichtung 22 gelagerte Hebel 29 vorgesehen, deren eines freies Ende mit einer Steuereinrichtung 30 und dessen anderes freies Ende mit einer Anschlagfläche 31 versehen ist. Durch Betätigen der Steuereinrichtungen 30 werden die Hebel 29 verschwenkt und heben dabei über die Anschlagflächen 31 die Aufnahmeplatten 10 geringfügig an und pressen sie gegen Festanschläge 38 an dem MAT 7. Dadurch ruhen nun die Aufnahmeplatten 10 nicht mehr in ihrer Schwimmlagerung, sondern sind feinpositioniert festgestellt.

Nach dem so erfolgten Ausrichten der Aggregate zu der Karosse 5 wird die Fügehilfe 12 zurückgeschwenkt, indem zuvor die Zylinder-Kolben-Einheit 23 zurückgefahren wird und die zangenartige Klemmeinrichtung 26 geöffnet wurde.

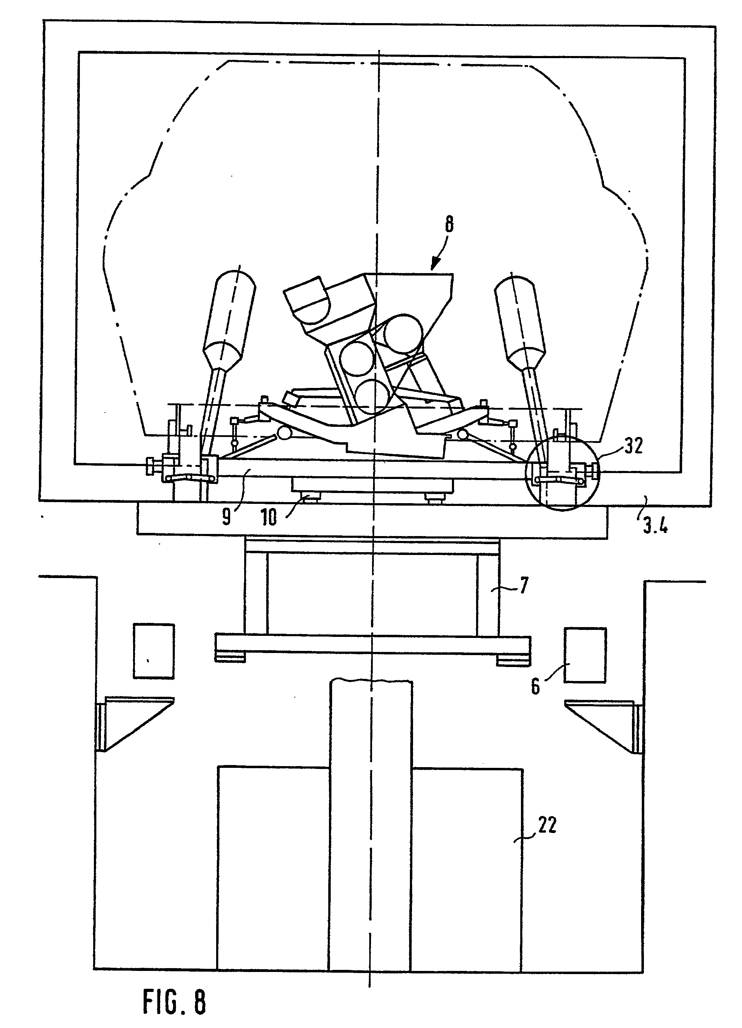

Sobald die Fügehilfe 12 aus dem Zwischenraum zwischen Karosse 5 und Aggregaten 8 entfernt ist, wird über die Hubeinrichtung 22 der MAT 7 angehoben und die Aggregate unter die Karosse 5 verfahren (Fig. 8). Aufgrund der vorher beschriebenen Ausrichtung fluchten nun die Befestigungsöffnungen oder Bolzen in der Karosse mit den Befestigungsöffnungen an den Aggregaten, so daß die Verschraubung nun stattfinden kann.

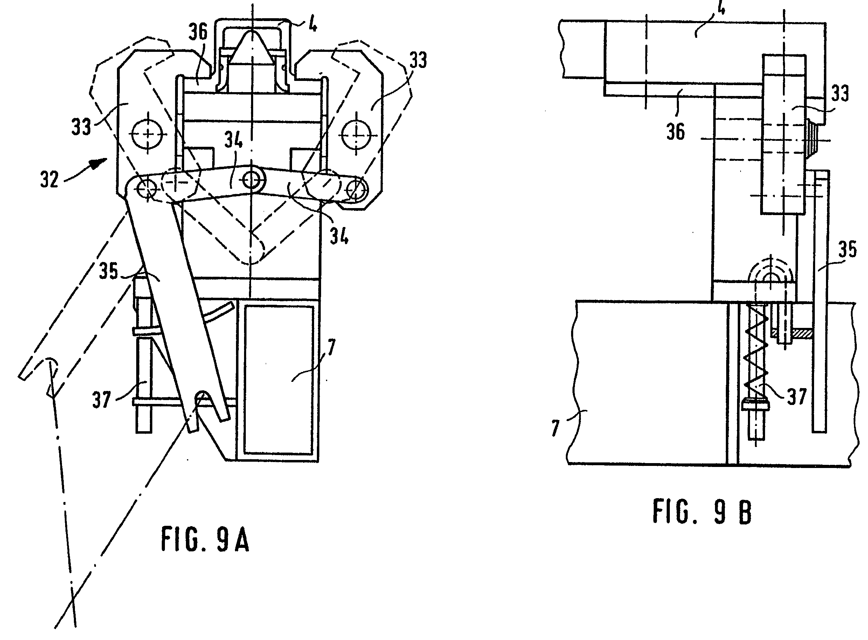

Da dies jedoch in der Fügestation aufgrund der bereits zugebauten Hubstation 11 nur in beschränktem Maße möglich ist, wird der MAT 7 mit dem Gehänge 3 über die Längstraverse 4 gekoppelt. Dies geschieht dadurch, daß an dem MAT 7 zwischen den beiden Aufnahmeplatten für Vorder- und Hinterachse die in Fig. 9a,b dargestellte Befestigungseinrichtung 32 vorgesehen ist. Diese besteht aus zwei klappbar gelagerten Haken 33, die über ein Gestänge 34 von einer Steuereinrichtung 35 geöffnet und geschlossen werden können. Diese Haken sind derart ausgebildet, daß sie an der Längstraverse 4 angeordnete Bunde hintergreifen und so den MAT 7 hängend an dem Gehänge 3 befestigen. Die Steuereinrichtung 35 wird entweder automatisch oder von Hand betätigt. Um sicherzustellen, daß die Haken 33 nicht unbeabsichtigt geöffnet werden, ist ein federbelasteter Sicherungsstift 37 vorgesehen, der erst gelöst werden muß, um die Steuereinrichtung 35 in die Öffnungslage der Haken 33 zu verschwenken (Fig. 9b). Sobald der MAT 7 an dem Gehänge 3 angekoppelt ist, fährt die Karosse 5 im Hängeförderer 1 zu einer Schraubstation. Hier kann die Verschraubung der Aggregate 8 mit der Karosse 5 nun von Hand von Werkern oder automatisch über Schraubroboter vorgenommen werden.

Anschließend wird der MAT 7 wieder von dem Gehänge 3 von Hand oder automatisch entkoppelt und von einer Absenkeinrichtung auf ein Transportsystem, beispielsweise ein Unterflurfördersystem, gesetzt, so daß er von diesen wieder zurückgeführt werden kann zu der Beladestation zum Aufladen und Positionieren der Aggregate.

Die Karosse 5 wird vom Hängeförderer 1 weiter zu den nächsten Bearbeitungsstationen transportiert.

**Patentansprüche**

1. Verfahren zum Zusammenfügen von Aggregaten von der Unterseite her mit einer Kraftfahrzeugkarosse, insbesondere Motor, Vorderachse, Antriebsstrang, Hinterachse, bei welchem die Aggregate auf einem verfahrbaren Montage-Aggregateträger liegen und die Karossen über Hängeförderer angeliefert werden zu einer Fügestation, in der die Aggregate mit der Karosse zusammengesetzt werden dadurch gekennzeichnet, daß in der Fügestation die Karosse angehalten und deren Lage abgefragt wird, daß anschließend die Aggregate auf dem Montage-Aggregateträger nach der erfaßten Lage der Karosse ausgerichtet und in dieser ausgerichteten Lage festgehalten werden, und daß anschließend der Montage-Aggregateträger gegen die hängende Karosse angehoben wird.

2. Verfahren nach Anspruch 1, dadurch gekennzeichnet, daß der Montage-Aggregateträger an dem Hängeförderer angekoppelt wird und anschließend zu einer Schraubstation weitertransportiert wird.

3. Verfahren nach einem der vorangegangenen Ansprüche, dadurch gekennzeichnet, daß die Karosse und der Montage-Aggregateträger in die Fügestation parallel laufend eingefahren werden.

4. Verfahren nach einem der vorangegangenen Ansprüche, dadurch gekennzeichnet, daß zum Ausrichten der Aggregate eine Fügehilfe in den Zwischenraum zwischen der Karosse und den Aggregaten eingeschwenkt wird, die die Lage der Karosse erfaßt, anschließend in dieser Stellung festgespannt wird und dann die Aggregate ausrichtet und nach dem Festklemmen der Aggregate wieder zurückgeschwenkt wird.

5. Verfahren nach einem der vorangegangenen Ansprüche, dadurch gekennzeichnet, daß die Karosse in der Fügestation in ihrer Lage gesichert wird.

6. Vorrichtung zum Durchführen des Verfahrens nach einem der Ansprüche 1 – 5, bestehend aus einer Transporteinrichtung, auf dem Montage-Aggregateträger mit vormontierten und positionierten Aggregaten angeordnet sind, aus einem Gehängeförderer mit einer darin befestigten Karosserie und aus einer Fügehilfe, dadurch gekennzeichnet, daß die Aggregate (8) auf einer Aggregate-Traverse (9) gelagert sind, die wiederum schwimmend auf dem Montage-Aggregateträger (7) gelagert ist, das Mittel (Fügehilfe 12) zum Ausrichten der Aggregate (8) über die Aggregatetraverse (9) nach der Lage der Karosserie von außerhalb der Transporteinrichtung (6) einschwenkbar sind, daß die nach der Lage der Karosse (5) ausgerichtete Aggregate-Traverse (9) in dieser Position gegenüber dem Montage-Aggregateträger (7) über eine Klemmeinrichtung festlegbar ist, daß der Montage-Aggregateträger (7) von einer Hubeinrichtung (22) gegen die Karosse (5) fahrbar ist.

7. Vorrichtung nach Anspruch 6, dadurch gekennzeichnet, daß die Aggregate-Traverse (9) unter Zwischenschaltung einer Aufnahmeplatte (10) auf dem Montage-Aggregateträger (7) gelagert ist.

8. Vorrichtung nach einem der vorangegangenen Ansprüche, dadurch gekennzeichnet, daß die Klemmeinrichtung aus einem von einer Steuereinrichtung (30) betätigten Hebel (29) besteht, die die Aufnahmeplatte (10) aus ihrer Lagerung anhebt.

9. Vorrichtung nach einem der vorangegangenen Ansprüche, dadurch gekennzeichnet, daß die Klemmeinrichtung aus einem von einer Steuereinrichtung (30) betätigten Hebel (29) besteht, der die Aufnahmeplatte (10) gegen einen ortsfesten Anschlag (38) drückt.

10. Vorrichtung nach einem der vorangegangenen Ansprüche, dadurch gekennzeichnet, daß die Fügehilfe (12) aus einem Gestell (13) besteht, in dem ein um eine vertikale Achse (15) schwenkbar gelagerter Rahmen (14) angeordnet ist, dessen oberes Ende eine Sucheinrichtung (16) zur Lageerkennung der Karosse (5) und dessen unteres Ende eine Korrektureinrichtung (17) für die Lage der Aggregate (8) aufweist.

11. Vorrichtung nach Anspruch 10, dadurch gekennzeichnet, daß der Rahmen (14) der Fügehilfe (12) über eine am Gestell (13) angeordnete Klemmeinrichtung (18) feststellbar ist.

12. Vorrichtung nach Anspruch 11, dadurch gekennzeichnet, daß die Klemmeinrichtung (18) als Zange (19) ausgebildet ist, die von einer Steuereinrichtung (20) bewegbar ist und eine mit dem Rahmen (14) verbundene Klemmplatte (21) festgeklemmt.

13. Vorrichtung nach einem der vorangegangenen Ansprüche,
dadurch gekennzeichnet, daß die Sucheinrichtung (16) aus einer Steuereinrichtung besteht, die einen verfahrbar gelagerten Dorn antreibt, dessen freies Ende eine trichterförmige Öffnung (24) oder einen kegelförmige Kopf (24.1) aufweist zur Aufnahme eines an der Karosse (5) angebrachten Suchstiftes (25) bzw. zum Einfahren in einer an der Karosse (5) angebrachten Passbohrung (25.1).

14. Vorrichtung nach einem der vorangegangenen Ansprüche,
dadurch gekennzeichnet, daß die Korrektureinrichtung (17) aus einer zangenartigen Klemmeinrichtung (26) besteht, die von einer Steuereinrichtung (27) betätigt wird.

15. Vorrichtung nach einem der vorangegangenen Ansprüche,
dadurch gekennzeichnet, daß die Aggregatetraverse (9) oder der Montage-Aggregateträger (7) Befestigungseinrichtungen (32) zum Ankoppeln an das Gehänge (3) bzw. an Gehängeelementen (Längstraverse (4)) aufweist.

16. Vorrichtung nach einem der vorangegangenen Ansprüche,
dadurch gekennzeichnet, daß in der Fügestation eine Halteeinrichtung für das Gehänge (3) der Karosse (5) vorgesehen ist.

17. Vorrichtung nach einem der vorangegangenen Ansprüche,
dadurch gekennzeichnet, daß die Halteeinrichtung aus mehreren, das Gehänge (3) anhebenden Bolzen und aus entgegengesetzt zur Kraftrichtung der Bolzen am Gehänge angreifenden Winkeln besteht.

18. Vorrichtung nach einem der vorangegangenen Ansprüche,
dadurch gekennzeichnet, daß die Befestigungseinrichtung (32) aus zangenartig gelagerten Haken (33) besteht, die von einer Steuereinrichtung (35) verschwenkbar sind und die an dem Gehänge (3) angeordnete Bunde (36) umgreifen.

19. Vorrichtung nach einem der vorangegangenen Ansprüche,
dadurch gekennzeichnet, daß an der Steuereinrichtung (35) ein federbelasteter Sicherungsstift (37) vorgesehen ist, der ein Verschwenken der Haken (33) im Lösungssinne verhindert.

**Claims**

1. A method of fitting units, more particularly an engine, front axle, drive train and rear axle, to a motor vehicle body from the underside, in which the units rest on a movable unit-mounting carrier and the bodies are delivered by suspension conveyors to an assembly station in which the units are fitted to the body, characterised in that the body is held and its position is scanned in the assembly station, the units on the unit-mounting carrier are then aligned in accordance with the detected position of the body and held in the aligned position, and the unit-mounting carrier is then lifted towards the suspended body.

2. A method according to claim 1, characterised in that the unit-mounting carrier is coupled to the suspension conveyor and then conveyed to a screwing station.

3. A method according to one of the preceding claims, characterised in that the body and the unit-mounting carrier are driven in parallel into the assembly station.

4. A method according to any of the preceding claims, characterised in that, in order to align the units, an assembly aid is pivoted into the space between the body and the units and detects the position of the body and is then clamped in this position and aligns the units and, after the units have been clamped, is pivoted back.

5. A method according to any of the preceding claims, characterised in that the body is secured in position in the assembly station.

6. Means for working the method according to any of claims 1 to 5, comprising a conveyor bearing the unit-mounting carrier with pre-assembled, positioned units, and also comprising a suspension conveyor containing a vehicle body and also comprising an assembly aid, characterised in that the units (8) are mounted on a cross-member (9) which is mounted in floating manner on the unit-mounting carrier (7), means (the assembly aid 12) for aligning the units (8) via the cross-member (9) are pivotable inwards from outside the conveyor (6) depending on the position of the body, the cross-member (9) aligned in accordance with the position of the body (5) is adapted to be held in this position relative to the unit-mounting carrier (7) by a clamping device, and the unit-mounting carrier (7) is movable by a lifting device (22) towards the body (5).

7. Means according to claim 6, characterised in the cross-member (9) is mounted on the unit-mounting carrier (7) with interposition of a receiving plate (10).

8. Means according to any of the preceding claims, characterised in that the clamping device comprises a lever (29) actuated by a control device (30) and raising the receiving plate (10) from its bearing.

9. Means according to any of the preceding claims, characterized in that the clamping device comprises a lever (29) actuated by a control device (30) and pressing the receiving plate (10) against a stationary abutment (38).

10. Means according to any of the preceding claims, characterized in that the assembly aid (12) comprises a stand (13) in which a frame (14) is pivotably mounted around a vertical shaft (15), the top end of the frame comprising a search device (16) for detecting the position of the body (5) and the bottom end comprising a device (17) for adjusting the position of the units (8).

11. Means according to claim 10, characterised in that the frame (14) of the assembly aid (12) is lockable by a clamping device (18) disposed on the stand (30).

12. Means according to claim 11, characterised in that the clamping device (18) is in the form of a vice (19) which is movable by a control device (20) and clamps a clamping plate (21) connected to the frame (14).

13. Means according to any of the preceding claims, characterised in that the search device (16) comprises a control device which drives a movably-mounted mandrel, the free end of which has a funnel-shaped opening (24) or a conical head (24.1) for receiving a locating pin (25) disposed on the body (5) or for insertion into a mating bore (25.1) from the body (5).

14. Means according to any of the preceding claims, characterised in that the adjusting device (17) comprises a vice-like clamping device (26) actuated by a control device (27).

15. Means according to any of the preceding claims, characterised in that the cross-member (9) or the unitmounting carrier (7) has securing devices (32) for coupling to the suspension (3) or to suspension components (longitudinal transverse member 4).

16. Means according to any of the preceding claims, characterised in that a holder for the suspension (3) of the body (5) is provided in the assembly station.

17. Means according to any of the preceding claims, characterised in that the holder comprises a number of pins for raising the suspension (3) and angle members engaging the suspension in the opposite direction to the force exerted by the pins.

18. Means according to any of the preceding claims, characterised in that the securing device (32) comprises hooks (33) mounted like a vice and pivotable by a control device (35) and engaging round collars (36) disposed on the suspension (3).

19. Means according to any of the preceding claims, characterised in that a spring-loaded securing pin (37) is provided on the control device (35) and prevents the hooks (33) pivoting in the release direction.

**Revendications**

1. Procédé pour le montage par en-dessous des groupes de propulsion dans une carrosserie automobile, en particulier le train avant, le tronçon d'entraînement, le train arrière, dans lequel les groupes sont livrés sur un support de groupes de montage mobile et dans lequel les carrosseries sont livrées sur des transporteurs suspendus à poste d'assemblage, dans lequel les groupes sont assemblés à la carrosserie, caractérisé en ce que les carrosseries séjournent dans le poste d'assemblage et que leur position est captée, en ce qu'ensuite les groupes sont orientés sur le support de groupes de montage selon la position captée de la carrosserie et fixés dans cette position orientée, et en ce qu'ensuite, le support de groupes de montage est soulevé contre la carrosserie suspendue.

2. Procédé selon la revendication 1, caractérisé en ce que le support de groupes de montage est accouplé au transporteur suspendu et est ensuite transporté plus loin sur un poste de vissage.

3. Procédé selon l'une des revendications précédentes, caractérisé en ce que la carrosserie et le support de groupes de montage sont introduits dans le poste d'assemblage en se déplaçant parallèlement.

4. Procédé selon l'une des revendications précédentes, caractérisé en ce que dans le but d'aligner les groupes, un auxiliaire d'assemblage est basculé dans l'espace intermédiaire situé entre la carrosserie et les groupes et capte la position de la carrosserie, un blocage ayant lieu ensuite dans cette position et les groupes étant ensuite orientés et le basculement de retour étant exécuté après blocage des groupes.

5. Procédé selon l'une des revendications précédentes, caractérisé en ce que la carrosserie est fixée dans sa position dans le poste d'assemblage.

6. Dispositif pour exécuter le procédé selon l'une des revendications 1 à 5, se composant d'un dispositif de transport sur lequel sont disposes des supports de groupes de montage comprenant des groupes prémontés et positionnés, se composant également d'un transporteur suspendu comprenant une carrosserie fixée à l'intérieur et se composant d'un auxiliaire de disposition, caractérisé en ce que les groupes (8) sont montés sur les traverses de groupes (9) qui sont à nouveau montées flottantes sur le support de groupes de montage (7), des moyens (auxiliaire d'assemblage 12) destinés à orienter les groupes (8) sur la traverse de groupes (9) suivant la position de la carrosserie sont susceptibles d'être basculées depuis l'extérieur du dispositif de transport (6), en ce que la traverse de groupes (g) orientée suivant la position de la carrosserie (5) est susceptible d'être fixée par l'intermédiaire d'un dispositif de blocage dans cette position, par rapport au support de groupes de montage (7), en ce que le support de groupes de montage (7) est susceptible d'être déplacé contre la carrosserie (5) par l'intermédiaire d'un dispositif de levage (22).

7. Dispositif selon la revendication 6, caractérisé en ce que la traverse de groupes (9) est montée sur le support de groupes de montage (7) en intercalant une plaque de réception (10).

8. Dispositif selon l'une des revendications précédentes, caractérisé en ce que le dispositif de blocage se compose d'un levier (29) actionné par un dispositif de commande (30) et soulevant la plaque de réception (10) de son support.

9. Dispositif selon l'une des revendications précédentes, caractérisé en ce que le dispositif de blocage se compose d'un levier (29) actionné par un dispositif de commande (30) et pressant la plaque de réception (10) contre une butée fixe (38).

10. Dispositif selon l'une des revendications précédentes, caractérisé en ce que l'auxiliaire d'assemblage (12) se compose d'un bâti (13) dans lequel est disposé un cadre (14) monté pivotant autour d'un axe vertical (15) et dont l'extrémité supérieure présente un dispositif de recherche (16) pour identifier la position de la carrosserie (5) et dont l'extrémité inférieure présente un dispositif de correction (17) de la position des groupes (8).

11. Dispositif selon la revendication 10, caractérisé en ce que le cadre (14) de l'auxiliaire d'assemblage (12) est susceptible d'être fixée sur un dispositif de blocage (18) disposé sur le bâti (13).

12. Dispositif selon la revendication 11, caractérisé en ce que le dispositif de blocage (18) est situé sous la forme d'une pince (19) qui est susceptible d'être déplacée par un dispositif de commande (20) et qu'il bloque une plaque de blocage (21) reliée au cadre (14).

13. Dispositif selon l'une des revendications précédentes, caractérisé en ce que le dispositif de recherche (16) se compose d'un dispositif de commande entraînant un mandrin mobile, dont l'autre extrémité présente un orifice (24) en entonnoir ou une tête de forme conique (24.1) dans le but de recevoir une tige de recherche (25) adjointe à la carrosserie (5) et à l'introduire dans un alésage d'ajustage (25.1) pratiqué dans la carrosserie (5).

14. Dispositif selon l'une des revendications précédentes, caractérisé en ce que le dispositif de correction (17) se compose d'un dispositif de blocage (26) de type à pince, qui est actionné par un dispositif de commande (27).

15. Dispositif selon l'une des revendications précédentes, caractérisé en ce que la traverse de groupes (9) ou le support de groupes de montage (7) présente des dispositifs de fixation (32) dans le but d'un accouplement à la suspension (3) ou aux éléments de suspension (traverse longitudinale 4).

16. Dispositif selon l'une des revendications précédentes, caractérisé en ce qu'il est prévu dans le poste d'assemblage un dispositif de maintien pour la suspension (3) de la carrosserie (5).

17. Dispositif selon l'une des revendications précédentes, caractérisé en ce que le dispositif de maintien se compose de plusieurs tiges soutenant la suspension (3) et d'une cornière s'engageant sur la suspension dans le sens opposé à la direction de la force des tiges.

18. Dispositif selon l'une des revendications précédentes, caractérisé en ce que le dispositif de fixation (32) se compose de crochets (33) montés en forme de pince et susceptibles de pivoter à l'aide d'un dispositif de commande (35) et entourant les collerettes (36) disposées sur la suspension (3).

19. Dispositif selon l'une des revendications précédentes, caractérisé en ce qu'une goupille de sécurité (37) sollicités élastiquement est prévue sur le dispositif de commande (35) et empêche tout pivotement des crochets (33) dans le sens d'une désolidarisation.

FIG. 1

EP 0 226 212 B1

FIG. 2

FIG. 3

FIG. 4

FIG. 5

FIG. 6A

FIG. 6 B

FIG. 7A

FIG. 7 B

FIG. 8

FIG. 9 A

FIG. 9 B

EP 0 226 212 B1